# EUROPEAN PATENT SPECIFICATION

(11) **EP 4 450 368 B1**
(45) Date of publication and mention of the grant of the patent: **06.05.2026**
(21) Application number: 24167323.5
(22) Date of filing: 28.03.2024
(51) Int. Cl.: B62B 3/02, B62B 5/00

(54) **CART**
WAGEN
CHARIOT

(30) Priority: 14.04.2023 JP 2023066557
(43) Date of publication of application: 23.10.2024
(73) Proprietor: Tsubakimoto Chain Co., Osaka 530-0005 (JP)
(72) Inventor: Hirata, Yuhi, Osaka, 530-0005 (JP); Saito, Yusuke, Osaka, 530-0005 (JP); Maeda, Munehiro, Osaka, 530-0005 (JP)
(74) Representative: dompatent

(56) References cited:
- FR-B1- 2 775 645
- US-A1- 2015 097 358
- US-A1- 2020 223 465

## Description

### BACKGROUND OF THE INVENTION

### 1. Field of the Invention

The present invention relates to a cart.

### 2. Description of the Related Art

Demand for a shopping cart with a collapsing mechanism that allows the same to be loaded onto the trunk of a driving vehicle has been rising in recent years. Japanese Translation of PCT Application No. 2022-507885, for example, discloses a shopping cart including a basket, front legs each having a wheel on a lower end thereof, and rear legs each having a wheel on a lower end thereof. The front legs are rotatable from an extended position to a collapsed position, in which the front legs are located adjacent the respective outer sides of side walls of the basket. The rear legs are rotatable from an extended position to a collapsed position, in which the rear legs are located adjacent and above upper edges of the basket. In this shopping cart, the front and rear legs are maintained in the extended positions by locking members. When collapsing the shopping cart, a handle is pulled, which causes an actuator inside the handle to move the locking members so that the front and rear legs shift to the collapsed positions. The shopping cart is placed on the car trunk in the collapsed state.
Further background art for the present invention is described in US 2015/097358 A1, US 2020/223465 A1 and FR 2 775 645 B1.

### SUMMARY OF THE INVENTION

One issue with the shopping cart described in Japanese Translation of PCT Application No. 2022-507885 is that the front legs are folded over the basket, hence the cart in the collapsed state can hardly be stored in a compact manner.

The present invention has been made in view of the problem described above, and it is an object of the invention to provide a compactly collapsible cart.

The cart according to the present invention includes a rack part where a load is placed, and a pair of front leg parts and a pair of rear leg parts provided to the rack part and having wheels on distal ends thereof, the cart being able to transition from a use state for use as a cart, through coordinated folding of the pair of front leg parts and the pair of rear leg parts, to a storage state in which the front and rear leg parts are stored below an upper surface of the rack part.

The cart according to the present invention is able to transition from a use state for use as a cart, through coordinated folding of the pair of front leg parts and the pair of rear leg parts, to a storage state in which the front and rear leg parts are stored below an upper surface of the rack part. The simple configuration allows for a collapsible cart design that achieves compactness in the collapsed state.

Each of the pair of front leg parts is connected under a front end portion of the rack part so to be rotatable from a use position in the use state to a stored position in the storage state; each of the pair of rear leg parts includes an upper rear leg part and a lower rear leg part; the upper rear leg part has one end connected under a rear end portion of the rack part so as to be rotatable from the use position to the stored position, and the other end, to which the lower rear leg part is connected so as to be rotatable from the use position to the stored position; and a connection part is provided for connection between the front leg part and the lower rear leg part so as to cause the lower rear leg part to move in coordination with rotation of the front leg part. The connection part is connected between the front leg part and the lower rear leg part so as to cause the lower rear leg part to move in coordination with rotation of the front leg part. Therefore, when the front leg part is rotated, the lower rear leg part, as well as the upper rear leg part rotatably connected thereto, move to the stored position in coordination. Thus, the legs can be brought to the storage state with a simple configuration, without using a component such as an actuator. The rotation of the front leg part initiates the series of actions. When placing the cart onto a cargo rack of a bicycle, for example, the front leg part can be rotated by sliding the cart onto the cargo rack. The cart can thus be brought to the storage state as the cart is being placed onto the cargo rack, so that there is no need to perform the collapsing action before placing the cart onto the cargo rack.

Preferably, the other end of the upper rear leg part and one end of the lower rear leg part are connected so as to be restricted from rotation in the use state and allowed to rotate during transition to the storage state. Specifically, the other end of the upper rear leg part and one end of the lower rear leg part may each include an extension part extending in a horizontal direction in the use state, an opening provided in each extension part, and an insertion member inserted into each of the openings, and the other end of the upper rear leg part and the one end of the lower rear leg part may be restricted from rotation in the use state by the insertion member inserted across each pair of the openings, and allowed to rotate during transition to the storage state. Switchably allowing and preventing relative rotation between the other end of the upper rear leg part and the one end of the lower rear leg part makes the simple design possible, without providing a special configuration for the switching between the use state and the storage state. Since the rotation is restricted in the use state, the rack part can maintain its orientation stably in the use state, and since the rotation is allowed during transition to the storage state, the cart can smoothly transition from the use state to the storage state. Use of the insertion members in this case allows for an even simpler cart design.

Preferably, a front restriction part is provided under a front end portion of the rack part for restricting forward and upward rotation of the front leg parts, and a rear restriction part is provided under a rear end portion of the rack part for restricting rearward and downward rotation of the rear leg parts. These restriction parts restricting the movements of the legs enable the link mechanism to work correctly and allow for stable use of the cart.

The connection part includes an upper connection part having one end connected to the front leg part, and a lower connection part having one end rotatably connected to the other end of the upper connection part, and the other end of the lower connection part is rotatably connected to the lower rear leg parts. This configuration allows for designing of a connection part that performs desired movements in a simple manner.

Preferably, the lower connection part includes a pair of side walls and a bottom wall provided between the side walls, and the bottom wall is oriented horizontally in the use state. This configuration allows the lower connection part to be used as a load rest.

Preferably, the front leg part is configured to rotate rearward and upward toward a bottom surface of the rack part. According to the present invention, the rotation of the front leg parts initiates the series of actions. Therefore, when placing the cart onto a cargo rack or the like of a bicycle, the configuration that causes the front leg part to rotate rearward and upward as the cart is slid onto the cargo rack allows the cart to be brought to the storage state simply as the cart is being placed onto the cargo rack. Thus there is no need to perform the collapsing action before placing the cart onto the cargo rack.

According to the present invention, a compactly collapsible cart can be provided.

### BRIEF DESCRIPTION OF THE DRAWINGS

FIG. 1 is a perspective view of a cart according to an embodiment of the present invention viewed from the front;
FIG. 2 is a perspective view of the cart according to the embodiment of the present invention viewed from the rear;
FIG. 3 is a rear view of the cart according to the embodiment of the present invention;
FIG. 4 is a side view of the cart according to the embodiment of the present invention with a basket placed thereon;
FIG. 5 is a side view of the cart according to the embodiment of the present invention;
FIG. 6 is a side view illustrating an operating state of the cart according to the embodiment of the present invention;
FIG. 7 is a side view illustrating an operating state of the cart according to the embodiment of the present invention;
FIG. 8 is a side view illustrating a storage state of the cart according to the embodiment of the present invention; and
FIG. 9 is a perspective view illustrating a storage state of the cart according to the embodiment of the present invention viewed from the rear.

### DESCRIPTION OF THE PREFERRED EMBODIMENTS

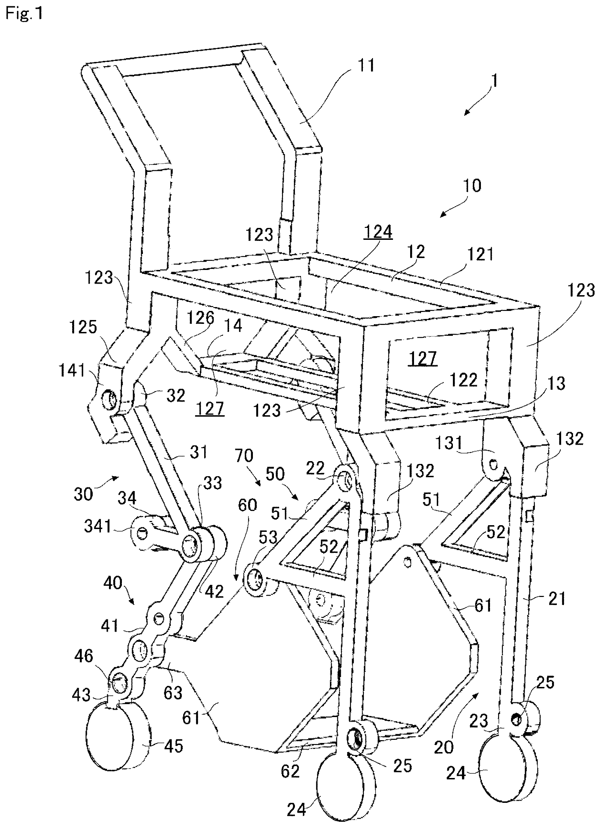

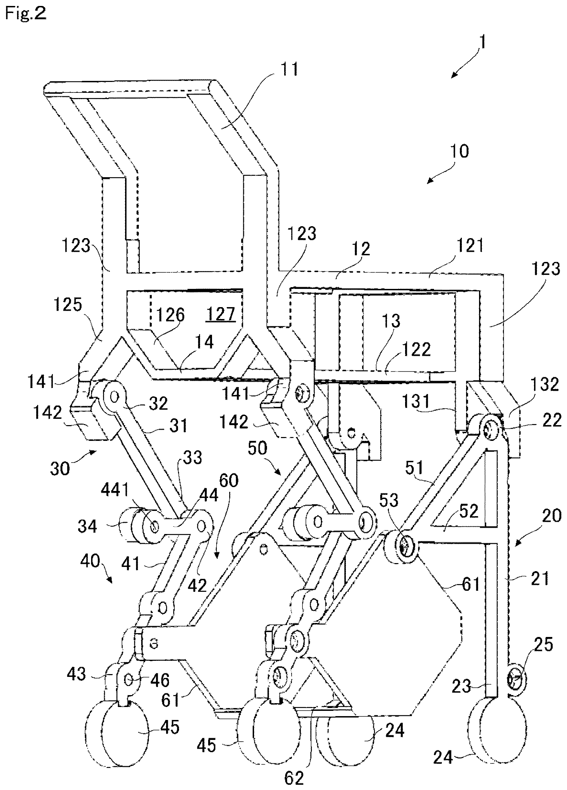

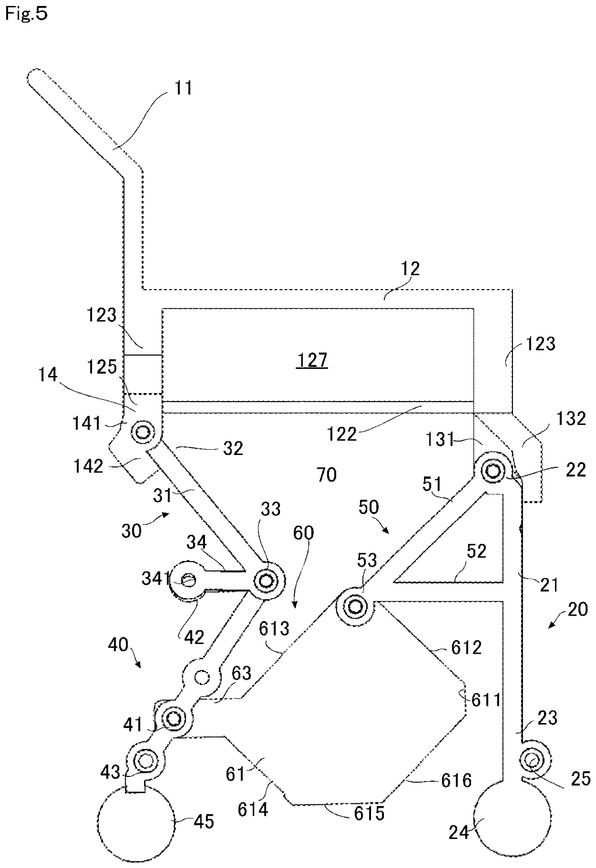

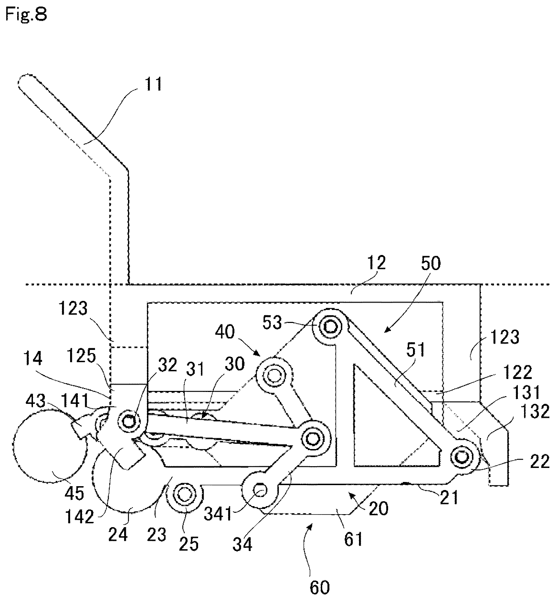

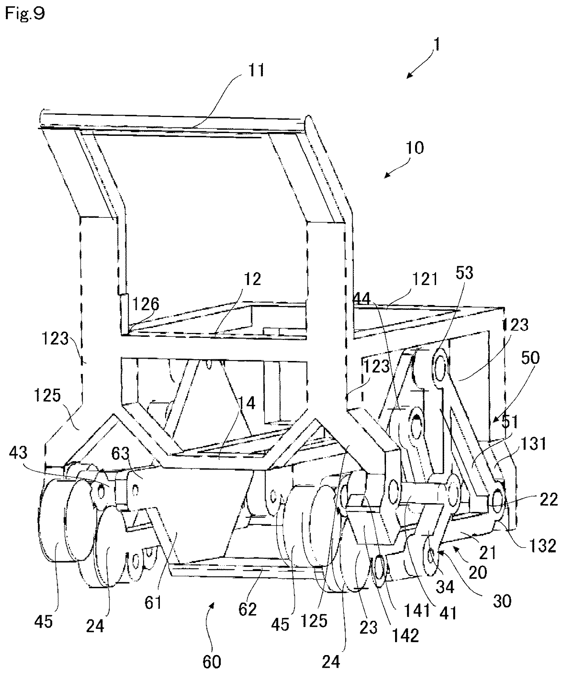

A cart 1 according to the embodiment will be described. The cart 1 is equipped with a collapsing mechanism that allows the cart to transition from a use state shown in FIG. 1 to FIG. 4 for normal use as a cart during shopping, to a storage state shown in FIG. 8 and FIG. 9 in which the cart is completely collapsed, via an operating state during the collapsing action shown in FIG. 5 to FIG. 7. First, the cart 1 in the use state will be described with reference to FIG. 1 to FIG. 4.

### Use state

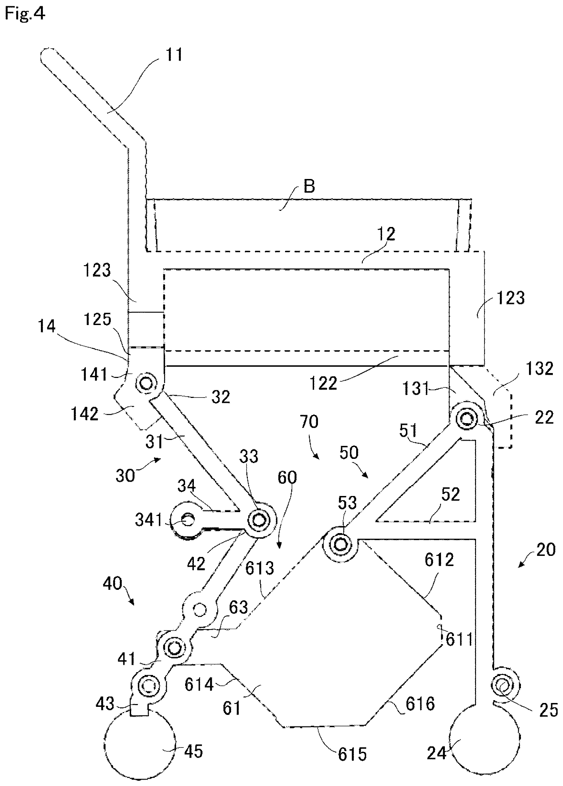

The cart 1 has a rack part 10. The rack part 10 includes a handle 11 and a rack part body 12. The rack part body 12 is a frame member and includes a rectangular upper frame 121 open at the top, a bottom part 122, and a plurality of posts 123 connecting the upper frame 121 and the bottom part 122. A load or a shopping basket B can be placed on the rack part body 12 through an opening 124 formed by the upper frame 121, as shown in FIG. 4.

The handle 11 extends upward from a terminal end edge of the upper frame 121 of the rack part body 12. The handle 11 is for an operator to maneuver the cart 1. End portions forming the bottom part 122 of the rack part body 12 include a front end portion 13 that is positioned on the front side. The front end portion 13 is formed with front extension parts 131 extending downward on both ends in the width direction. Two of the posts 123 of the rack part body 12 in the rear of the rack part 10 are each bifurcated in the width direction. The respective outer portions 125 of the bifurcated ends constitute both ends in the width direction of a rear end portion 14 of the rack part 10. The inner portions 126 of the bifurcated ends constitute the bottom part 122 of the rack part 10. A rear extension part 141 extends downward from each of the outer portions 125. The rear extension parts 141 are positioned more outside than the front extension parts 131. The bottom part 122 has a smaller width than the upper frame 121. A space 127 is formed between the bottom part 122 and the upper frame 121.

The cart 1 has a pair of front leg parts 20. Each front leg part 20 includes a bar-like front leg body 21. One ends 22 of the front leg bodies 21 are rotatably connected to the outer side of the respective front extension parts 131 of the front end portion 13. A wheel 24 is provided to the other end 23 of the front leg body 21. Above the wheel 24 of each front leg body 21 is a portion that extends forward, with a front leg opening 25 formed therein. Although not shown, a bar can be inserted into each front leg opening 25 to restrict torsion of the front leg part 20. The front extension parts 131 each include a front restriction part 132 that extends further forward. These front restriction parts 132 restrict forward rotation of the front leg parts 20.

The cart 1 has a pair of upper rear leg parts 30. Each upper rear leg part 30 includes a bar-like upper rear leg body 31. One ends 32 of the upper rear leg bodies 31 are rotatably connected to the inner side of the respective rear extension parts 141 of the rear end portion 14. The rear extension parts 141 each include a rear restriction part 142 that extends further diagonally downward and forward. These rear restriction parts 142 restrict rearward (outward) rotation of the upper rear leg parts 30. The other ends 33 of the upper rear leg bodies 31 are connected to one ends 42 of lower rear leg parts 40 to be described later such that both ends are rotatable relative to each other. Furthermore, upper fixing parts 34 that extend horizontally in the use state are provided at the other ends 33 of the upper rear leg bodies 31. The upper fixing parts 34 are each formed with an upper fixing opening 341 in their open ends.

The cart 1 has a pair of lower rear leg parts 40. Each lower rear leg part 40 includes a bar-like lower rear leg body 41. One ends 42 of the lower rear leg bodies 41 are connected to the other ends 33 of the upper rear leg parts 30 such that both ends are rotatable relative to each other. A wheel 45 is provided to the other end 43 of each lower rear leg body 41. Above the wheel 45 of each lower rear leg body 41 is formed a rear leg opening 46. Although not shown, a bar can be inserted into each rear leg opening 46 to restrict torsion of the upper rear leg part 30 and lower rear leg part 40.

Furthermore, lower fixing parts 44 that extend horizontally in the use state are provided at one ends 42 of the lower rear leg bodies 41. The lower fixing parts 44 are each formed with a lower fixing opening 441 in their open ends. An insertion member may be inserted into the upper fixing opening 341 and the lower fixing opening 441 to secure the upper fixing part 34 and the lower fixing part 44. For example, the upper fixing part 34 and the lower fixing part 44 are fixedly joined together when the insertion member is inserted into these openings using a ball plunger, for example. The upper fixing part 34 and the lower fixing part 44 can be configured to be unlocked by retracting the ball plunger or the like.

The cart 1 includes a connection part 70, which is composed of an upper connection part 50 that extends from the front leg parts 20, and a lower connection part 60 that is connected to this upper connection part 50 and the lower rear leg parts 40. The upper connection part 50 includes first connection parts 51 and second connection parts 52. The first connection parts 51 extend from one ends 22 of the front leg parts 20, and are rotatably connected to the outer side of side walls 61 of the lower connection part 60. The second connection parts 52 are provided between the joints 53 between the first connection parts 51 and the side walls 61, and the front leg bodies 21.

The lower connection part 60 includes the side walls 61, which are polygonal plates as viewed from the side, and a bottom wall 62 between the side walls 61. The side walls 61 each include, as shown in FIG. 4, a first side 611 that is the frontmost side in the use state, a second side 612 extending upward from the first side 611, and a third side 613 extending rearward and downward from the second side 612. A lower extension part 63 extends from the third side 613 horizontally in the use state. The side wall 61 includes a fourth side 614 extending downward from the bottom wall 62, a fifth side 615 extending forward from the fourth side 614 to be horizontal in the use state, and a sixth side 616 extending upward from the fifth side 615. The sixth side 616 is connected to the first side 611.

The bottom wall 62 is provided between the fifth sides 615. The bottom wall 62 is held horizontally in the use state. In the use state, the lower connection part 60 can be used as a load rest, i.e., a load such as a bag can be placed on the bottom wall 62. The lower extension parts 63 are each rotatably connected to the lower rear leg parts 40 at the distal ends on the outer side.

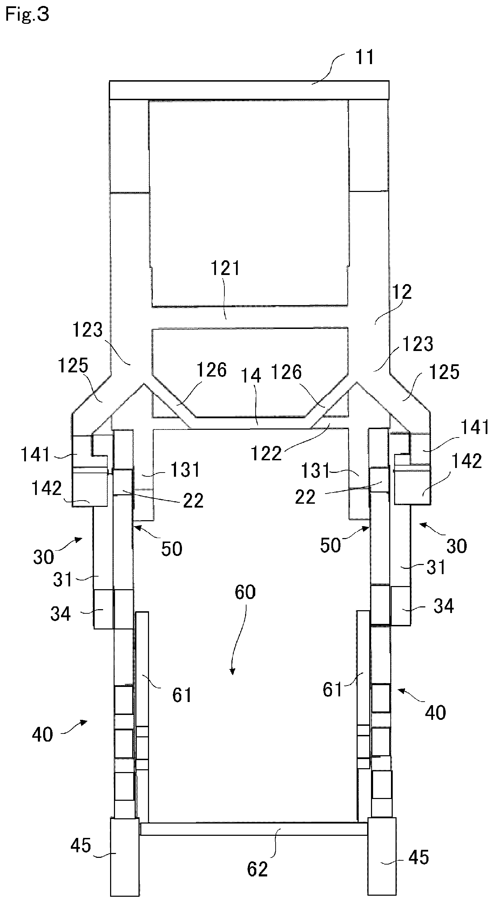

As shown in FIG. 3, the front leg parts 20 and the lower rear leg parts 40 are aligned along the same planes in the width direction of the cart 1. The upper rear leg parts 30 are arranged more outside than the front leg parts 20 and the lower rear leg parts 40 in the width direction of the cart 1. The lower connection part 60 is arranged more inside than the front leg parts 20 and the lower rear leg parts 40 in the width direction of the cart 1. The rear extension parts 141 are positioned higher than the front extension parts 131. The one ends 32 of the upper rear leg parts 30 are positioned higher than the one ends 22 of the front leg parts 20.

In the cart 1 according to this embodiment, the front leg part 20, upper rear leg part 30, lower rear leg part 40, connection part 70, and rack part 10 together configure a link mechanism, as shown in FIG. 4 in a side view. The link mechanism is configured as a 5-joint link mechanism, including one end 22 of the front leg part 20 as a joint, the first connection part 51, the joint 53 of the upper connection part 50 as a joint, the side wall 61, the distal end of the lower extension part 63 as a joint, the lower rear leg body 41, the other end 33 of the upper rear leg part 30 as a joint, the upper rear leg body 31, one end 32 of the upper rear leg part 30 as a joint, and the rack part body 12.

In this link mechanism, the forward rotation of the front leg parts 20 is restricted by the front restriction parts 132 in the use state. The front leg parts 20 do not open further outward in the use state, so that the first connection parts 51 that rotate with the front leg parts 20 are also restricted from rotating forward. Likewise, rearward rotation of the upper rear leg parts 30 is restricted by the rear restriction parts 142. In the use state, the upper fixing parts 34 and lower fixing parts 44 are secured, and the one ends 42 of the lower rear leg bodies 41 serving as joints are also fixed in position. Therefore, neither the lower rear leg bodies 41 nor the upper rear leg bodies 31 rotate. Thus the link mechanism does not work in the use state of the cart 1 according to this embodiment and the bottom part 122 can always stay horizontal. This cart 1, when used during shopping in a store, for example, allows use of the rack part 10 to put a load thereon, so that a heavy load need not be carried around, whether inside or outside the store.

As will be seen from the following description of the operating state and storage state, the link mechanism described above works as a link mechanism in the operating state, whereby the front leg parts 20, upper rear leg parts 30, and lower rear leg parts 40 are folded and stored below the upper surface of the rack part 10.

### Operating State and Storage State

The operating state will be described with reference to FIG. 5 to FIG. 7.

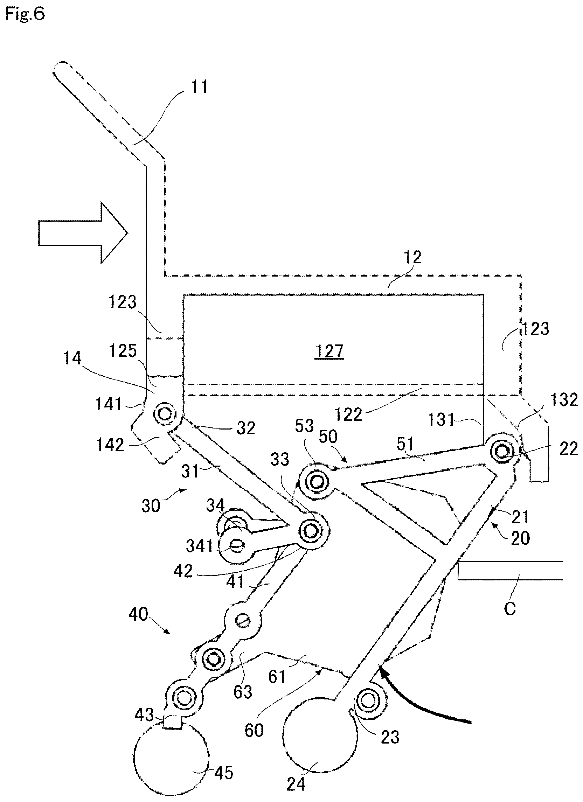

For transition from the use state shown in FIG. 5 to the operating state, first, the upper fixing parts 34 and the lower fixing parts 44 are unlocked. After that, the front leg parts 20 are pressed, as shown in FIG. 6. The front leg parts 20 can be pressed by bringing the front leg parts 20 into contact with an edge of a cargo rack C of a bicycle, for example, and by pushing the cart 1 forward. Pressing the front leg parts 20 causes the front leg parts 20 to rotate about the one ends 22 as pivots toward the bottom part 122 of the rack part 10. This rotation also causes the upper connection part 50 to rotate about the one ends 22 of the front leg bodies 21 as pivots toward the bottom part 122 of the rack part 10. As the upper connection part 50 rotates, the lower connection part 60 moves, too, upward. Pushing the cart 1 further forward causes the sixth side 616 and the bottom wall 62 (fifth side 615) of the lower connection part 60 to each slide on the cargo rack C of the bicycle. Thus the cart 1 can be placed onto the cargo rack C of the bicycle with a small force.

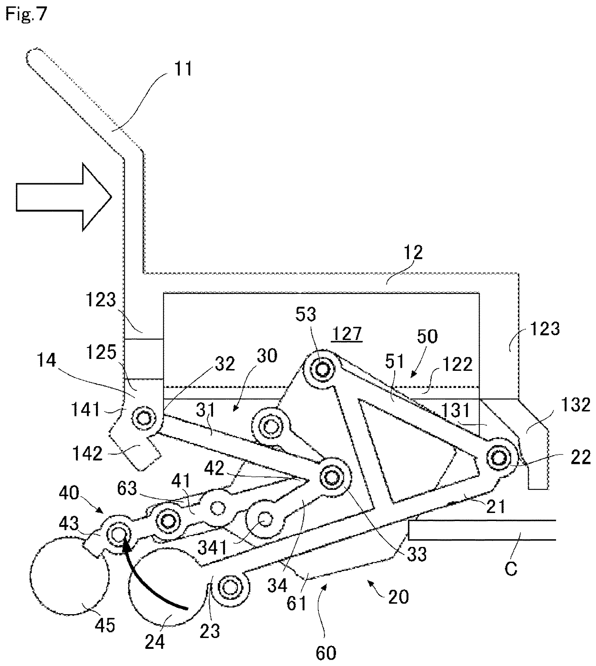

Pushing the cart 1 further forward causes the front leg parts 20 to rotate further, and the lower connection part 60 to move upward, as shown in FIG. 7. This movement of the lower connection part 60 causes the lower rear leg parts 40 to move upward. The upward movement of the lower rear leg parts 40 causes the upper rear leg parts 30 to rotate about the one ends 32 upward. Thus the upper rear leg parts 30 begin to overlap the lower rear leg parts 40 as viewed from the side.

As shown in FIG. 8 and FIG. 9, when the front leg parts 20 have been rotated to be horizontal to the floor surface, the upper rear leg parts 30 and lower rear leg parts 40 overlap one another in a side view. The front leg parts 20 stop the rotation when their wheels 24 come to contact with the lower rear leg parts 40. Thus the front leg parts 20 are stored below the upper surface (indicated with dot lines in FIG. 8) formed by the upper frame 121 of the rack part 10. The upper rear leg parts 30 and lower rear leg parts 40 overlap each other in the width direction and are stored below the upper surface formed by the upper frame 121 of the rack part 10. The cart 1 according to this embodiment is compactly collapsible in this way, without the front leg parts 20, or the upper rear leg parts 30 and lower rear leg parts 40, sticking out from the upper surface of the rack part 10. The upper rear leg bodies 31, lower rear leg bodies 41, and front leg bodies 21 are stored below the lower surface formed by the bottom part 122. The upper connection part 50 and lower connection part 60 are stored in the space 127 between the bottom part 122 and the upper frame 121 of the rack part 10. The bottom wall 62 of the lower connection part 60 becomes horizontal in the storage state.

The cart 1 according to this embodiment allows for easy folding of the cart legs in this way without any complex mechanical structure such as an actuator, only by a link mechanism that works in one action, i.e., by pushing the front leg parts 20 toward the bottom part 122 of the rack part 10 (rearward and upward). The pushing can be achieved while sliding the cart 1 onto the cargo rack C of a bicycle or the like, and there is no need to collapse the cart before placing it onto the rack. Therefore, even when the rack part 10 is full of load during use, the cart 1 allows the load to be loaded onto the bicycle or the like without manual transfer of a heavy load.

The front leg parts 20 and the lower rear leg parts 40 are aligned along the same planes in the width direction. However, the front leg parts 20 are positioned below the folded lower rear leg parts 40 so that they do not interfere with each other. The upper rear leg parts 30 are arranged more outside than the front leg parts 20 and the lower rear leg parts 40 in the width direction so that they do not interfere with each other. The lower connection part 60 is arranged more inside than the front leg parts 20 and the lower rear leg parts 40 in the width direction so that they do not interfere with each other. Thus the legs can be folded smoothly.

In the storage state, the folded front leg parts 20 and the fifth side 615 of the lower connection part 60 are horizontal to the cargo rack, the fifth side 615 of the lower connection part 60 being positioned lower than the front leg parts 20. With a cargo rack C in the shape of a box, for example, the front leg parts 20 may be arranged on cargo rack wall surfaces, and the fifth side 615 of the lower connection part 60 may be placed on the bottom surface of the cargo rack C. The front leg parts 20 and the lower connection part 60 thus allow stable placement on the cargo rack C, enabling the rack part 10 to stay horizontal in the storage state, so that a load can be held more stably. In the storage state, there is a gap formed between the front leg parts 20 and the front restriction parts 132. By inserting a wall in this gap, the cart 1 in the storage state can be stably fixed to the cargo rack.

The cart 1 can readily be returned from the storage state to the use state by gripping the handle 11 and sliding the cart backward down from the cargo rack C.

### Variation Example

While a cart according to the present invention has been described above, the cart according to the present invention is not limited to the embodiment described above. The connection part 70 may have any configuration as long as it is connected so as to cause the lower rear leg parts 40 to move in coordination with the rotation of the front leg parts 20. For example, a link structure can be made by providing slots in the lower rear leg parts 40, inserting one ends of the connection part 70 in the slots, and connecting the other ends to one ends of the front leg parts 20. While the lower connection part 60 of the connection part 70 in this embodiment is configured to allow a load to be placed thereon in the use state, the configuration is not limited to this and the bottom wall may be omitted.

The structure for fixedly locking and unlocking the upper fixing parts 34 and the lower fixing parts 44 is not limited to the one in this embodiment. As long as the upper rear leg parts 30 and lower rear leg parts 40 do not rotate in the use state and are allowed to rotate in the operating state, any structure can be used.

The cart 1 illustrated in the embodiment above can be used as a shopping cart, for example, which is preferable because the cart allows stable attachment to and detachment from a car trunk or a cargo rack of a tricycle. The cart 1 also allows itself to be placed on a shelf during storage, which is preferable, as the cart in this case can be used as a basket.

## Claims

1. A cart (1) comprising:
a rack part (10) where a load is placed; and
a pair of front leg parts (20) and a pair of rear leg parts provided to the rack part and having wheels (24,45) on distal ends thereof,
the cart (1) being able to transition from a use state for use as a cart, through coordinated folding of the pair of front leg parts (20) and the pair of rear leg parts, to a storage state in which the front and rear leg parts are stored below an upper surface of the rack part,
each of the pair of front leg parts (20) is connected under a front end portion of the rack part (10) so as to be rotatable from a use position in the use state to a stored position in the storage state,
each of the pair of rear leg parts comprises an upper rear leg part (30) and a lower rear leg part (40),
the upper rear leg part (30) has one end connected under a rear end portion of the rack part (10) so as to be rotatable from the use position to the stored position, and another end, to which the lower rear leg part (40) is connected so as to be rotatable from the use position to the stored position,
a connection part (70) is provided for connection between the front leg part and the lower rear leg part so as to cause the lower rear leg part to move in coordination with rotation of the front leg part,
**characterized in that**
the connection part (70) comprises an upper connection part (50) having one end connected to the front leg part, and a lower connection part (60) having one end rotatably connected to another end of the upper connection part (50), another end of the lower connection part (60) is rotatably connected to the lower rear leg parts (40).

2. The cart according to claim 1, wherein the other end of the upper rear leg part (30) and one end of the lower rear leg part (40) are connected to be restricted from rotation in the use state and allowed to rotate during transition to the storage state.

3. The cart according to claim 1, wherein a front restriction part (132) is provided under a front end portion of the rack part so as to restrict forward and upward rotation of the front leg part.

4. The cart according to claim 1, wherein a rear restriction part (142) is provided under a rear end portion of the rack part so as to restrict rearward and downward rotation of the rear leg part.

5. The cart according to claim 1, wherein each of the other end of the upper rear leg part (30) and one end of the lower rear leg part (40) includes an extension part extending in a horizontal direction in the use state, an opening provided in each of the extension parts, and an insertion member inserted into each of the openings,
the other end of the upper rear leg part and the one end of the lower rear leg part are restricted from rotation in the use state by the insertion member inserted across each pair of the openings, and allowed to rotate during transition to the storage state.

6. The cart according to claim 1, wherein the lower connection part comprises a pair of side walls (61) and a bottom wall (62) provided between the side walls (61), and
the bottom wall (62) is oriented horizontally in the state of use.

7. The cart according to claim 1, wherein the front leg part (20) is configured to rotate rearward and upward toward a bottom surface of the rack part (10).

## Patentansprüche

1. Wagen (1), der aufweist:
ein Ablageteil (10), auf dem eine Last platziert wird; und
ein Paar von vorderen Beinteilen (20) und ein Paar von hinteren Beinteilen, die an dem Ablageteil vorgesehen sind und Räder (24, 45) an ihren distalen Enden aufweisen,
wobei der Wagen (1) in der Lage ist, von einem Gebrauchszustand zur Verwendung als Wagen durch koordiniertes Falten des Paares von vorderen Beinteilen (20) und des Paares von hinteren Beinteilen in einen Aufbewahrungszustand überzugehen, in dem die vorderen und hinteren Beinteile unter einer oberen Fläche des Ablageteils gelagert sind,
wobei jedes des Paares von vorderen Beinteilen (20) unter einem vorderen Endabschnitt des Ablageteils (10) so verbunden ist, dass es von einer Gebrauchsposition im Gebrauchszustand in eine gelagerte Position im Aufbewahrungszustand drehbar ist,
wobei jedes der beiden hinteren Beinteile ein oberes hinteres Beinteil (30) und ein unteres hinteres Beinteil (40) aufweist,
wobei das obere hintere Beinteil (30) ein Ende hat, das unter einem hinteren Endabschnitt des Ablageteils (10) so verbunden ist, dass es von der Gebrauchsposition in die Aufbewahrungsposition drehbar ist, und ein anderes Ende, mit dem das untere hintere Beinteil (40) so verbunden ist, dass es von der Gebrauchsposition in die Aufbewahrungsposition drehbar ist,
wobei ein Verbindungsteil (70) zur Verbindung zwischen dem vorderen Beinteil und dem unteren hinteren Beinteil vorgesehen ist, um das untere hintere Beinteil zu veranlassen, sich in Koordination mit der Drehung des vorderen Beinteils zu bewegen,
**dadurch gekennzeichnet, dass**
das Verbindungsteil (70) ein oberes Verbindungsteil (50), dessen eines Ende mit dem vorderen Beinteil verbunden ist, und ein unteres Verbindungsteil (60) aufweist, dessen eines Ende drehbar mit einem anderen Ende des oberen Verbindungsteils (50) verbunden ist, wobei ein anderes Ende des unteren Verbindungsteils (60) drehbar mit den unteren hinteren Beinteilen (40) verbunden ist.

2. Wagen nach Anspruch 1, wobei das andere Ende des oberen hinteren Beinteils (30) und ein Ende des unteren hinteren Beinteils (40) so verbunden sind, dass sie im Gebrauchszustand in ihrer Drehung eingeschränkt sind und sich beim Übergang in den Aufbewahrungszustand drehen können.

3. Wagen nach Anspruch 1, wobei ein vorderes Beschränkungsteil (132) unter einem vorderen Endabschnitt des Ablageteils vorgesehen ist, um die Vorwärts- und Aufwärtsdrehung des vorderen Beinteils zu beschränken.

4. Wagen nach Anspruch 1, wobei ein hinteres Beschränkungsteil (142) unter einem hinteren Endabschnitt des Ablageteils vorgesehen ist, um die Rückwärts- und Abwärtsdrehung des hinteren Beinteils zu beschränken.

5. Wagen nach Anspruch 1, wobei das andere Ende des oberen hinteren Beinteils (30) und das eine Ende des unteren hinteren Beinteils (40) jeweils ein Verlängerungsteil, das sich im Gebrauchszustand in horizontaler Richtung erstreckt, eine in jedem der Verlängerungsteile vorgesehene Öffnung und ein in jede der Öffnungen eingesetztes Einführelement aufweisen,
wobei das andere Ende des oberen hinteren Beinteils und das eine Ende des unteren hinteren Beinteils im Gebrauchszustand durch das über jedes Paar der Öffnungen eingefügte Einführelement an der Drehung gehindert werden und sich während des Übergangs in den Aufbewahrungszustand drehen können.

6. Wagen nach Anspruch 1, wobei der untere Verbindungsteil ein Paar Seitenwände (61) und eine zwischen den Seitenwänden (61) vorgesehene Bodenwand (62) aufweist, und
wobei die Bodenwand (62) im Gebrauchszustand horizontal ausgerichtet ist.

7. Wagen nach Anspruch 1, wobei das vordere Beinteil (20) so ausgebildet ist, dass es sich nach hinten und nach oben in Richtung einer Bodenfläche des Ablageteils (10) dreht.

## Revendications

1. Chariot (1) comprenant :
une partie étagère (10) où une charge est placée ; et
une paire de parties de jambe avant (20) et une paire de parties de jambe arrière disposées à la partie étagère et ayant des roues (24, 45) à des extrémités distales de celles-ci ;
le chariot (10) étant en mesure de transiter d'un état d'utilisation pour être utilisé comme un chariot, par un pliage coordonné de la paire de parties de jambe avant (20) et de la paire de parties de jambe arrière, à un état de stockage dans lequel les parties de jambe avant et arrière sont stockées en-dessous d'une surface supérieure de la partie étagère,
chacune de la paire de parties de jambe avant (20) étant connectée en-dessous d'une zone d'extrémité avant de la partie étagère (10) de façon à pouvoir être tournée d'une position d'utilisation en l'état d'utilisation à une position de stockage en l'état de stockage,
chacune de la partie de jambe arrière comprenant une partie de jambe arrière supérieure (30) et une partie de jambe arrière inférieure (40),
la partie de jambe arrière supérieure (30) ayant une extrémité connectée sous une partie d'extrémité arrière de la partie étagère (10) de façon à pouvoir être tournée de la position d'utilisation à la position de stockage, et une autre extrémité, à laquelle la partie de jambe arrière inférieure (40) est connectée, de façon à pouvoir être tournée de la position d'utilisation à la position de stockage,
une partie de connexion (70) étant prévue pour la connexion entre la partie de jambe avant et la partie de jambe arrière inférieure afin de faire la partie de jambe arrière inférieure se déplacer en coordination avec la rotation de la partie de jambe avant,
**caractérisé en ce que**
la partie de connexion (70) comprend une partie de connexion supérieure (50) avec une extrémité connectée à la partie de jambe avant, et une partie de connexion inférieure (60) avec une extrémité connectée en rotation à une autre extrémité de la partie de connexion supérieure (50), une autre extrémité de la partie de connexion inférieure (60) étant connectée en rotation à la partie de jambe arrière inférieure (40).

2. Chariot selon la revendication 1, l'autre extrémité de la partie de jambe arrière supérieure (30) et une extrémité de la partie de jambe arrière inférieure (40) étant connectées afin d'être empêchée de tourner en l'état d'utilisation et d'être permise à tourner pendant la transition vers l'état stocké.

3. Chariot selon la revendication 1, une partie d'empêchement avant (132) étant prévue en-dessous d'une partie d'extrémité avant de la partie étagère afin d'empêcher une rotation vers l'avant et le haut de la partie de jambe avant.

4. Chariot selon la revendication 1, une partie d'empêchement arrière (142) étant prévue en-dessous d'une partie d'extrémité arrière de la partie étagère afin d'empêcher une rotation vers l'arrière et le bas de la partie de jambe arrière.

5. Chariot selon la revendication 1, chacune de l'autre extrémité de la partie de jambe arrière supérieure (30) et de l'extrémité de la partie de jambe arrière inférieure (40) comprenant une partie d'extension s'étendant dans une direction horizontale en l'état d'utilisation, une ouverture prévue dans chacune des parties d'extension et un élément d'insertion insérée dans chacune des ouvertures,
l'autre extrémité de la partie de jambe arrière supérieure et l'extrémité de la partie de jambe arrière inférieure étant empêchée de tourner en l'état d'utilisation par l'élément d'insertion inséré à travers chaque paire d'ouvertures, et permise de tourner pendant la transition vers l'état stocké.

6. Chariot selon la revendication 1, la partie de connexion inférieure comprenant une paire de parois latérales (61) et une paroi de fond (62) prévues entre les parois latérales (61) et
la paroi de fond (62) étant orientée horizontalement en l'état d'utilisation.

7. Chariot selon la revendication 1, la partie de jambe avant (20) étant configurée pour tourner en arrière et vers le haut vers une surface de fond de la partie étagère (10).
